# FASCICULE DE BREVET EUROPEEN

(11) **EP 1 220 631 B1**
(45) Date de publication et mention de la délivrance du brevet: **03.08.2005**
(21) Numéro de dépôt: 00967968.9
(22) Date de dépôt: 06.10.2000
(51) Int. Cl.: A47J 31/54

(54) **REGULATION EN TEMPERATURE D'UNE CAFETIERE EXPRESSO**
TEMPERATURKONTROLLE FÜR EINE ESPRESSOMACHINE
TEMPERATURE REGULATION OF AN ESPRESSO COFFEE MAKER

(30) Priorité: 14.10.1999 FR 9913051
(43) Date de publication de la demande: 10.07.2002
(73) Titulaire: SEB S.A., 69130 Ecully (FR)
(72) Inventeur: BADOL, Pascal, F-69970 Chaponnay (FR); CUBIZOLLES, Serge, F-69007 Lyon (FR)
(74) Mandataire: Kiehl, Hubert
(86) Numéro de dépôt international: PCT/FR2000/002783
(87) Numéro de publication internationale: WO 2001/026521

(56) Documents cités:
- EP-A- 0 771 542
- EP-A- 0 935 938
- US-A- 4 565 121
- US-A- 4 758 709
- US-A- 5 639 023

## Description

La présente invention concerne les cafetières électriques comportant un réservoir d'eau froide, une pompe électrique, un échangeur de chaleur et un récipient ou filtre destiné à recevoir la mouture de café, telles que les cafetières du type expresso ou filtre à pompe électrique.

L'échangeur de chaleur comporte généralement un élément chauffant électrique et un circuit d'eau en relation thermique avec cet élément chauffant, où l'eau ne circule que quand la pompe fonctionne. L'échangeur avec son élément chauffant, ses moyens de fixation et ses organes électriques de sécurité constitue le plus souvent un sous ensemble appelé ci-après thermobloc qui présente une capacité thermique non négligeable devant la puissance électrique mise en jeu, et qui est responsable du temps de chauffe préalable à l'élaboration du café.

Dans les cafetières les plus simples, où la commande d'extraction de café est manuelle, le thermobloc est régulé en température par un thermostat dont la consigne est fixe et dont le capteur renseigne sur une zone petite devant les dimensions du thermobloc. La mise en route manuelle de l'extraction de café est autorisée au premier déclenchement du thermostat, c'est à dire quand la température de consigne a été atteinte la première fois.

En général, le capteur de thermostat est placé à un endroit du thermobloc qui s'échauffe vite, de façon à ce qu'il ait une bonne réactivité aux échauffements ultérieurs. De ce fait, lors d'une première utilisation de la cafetière, la température du thermobloc n'est pas encore stabilisée et n'est donc pas uniforme. Le thermostat voit alors une température supérieure à la température effective de l'eau. Ceci conduit à régler la température de consigne du thermostat à une valeur plus élevée que la température souhaitée pour l'eau. Cependant, lors d'une utilisation ultérieure tardive, la température du thermobloc s'uniformise à la température de consigne élevée, faisant que l'énergie accumulée dans le thermobloc est importante. L'eau est alors trop chauffée pour que le café soit obtenu dans des conditions optimales. Si par contre la température de consigne n'est pas décalée vers le haut, c'est le premier café qui est trop froid.

Des inconvénients voisins sont rencontrés dans la régulation des cafetières filtre. Le brevet FR 2419704 décrit une cafetière filtre avec un dispositif mettant en route le débit d'eau en retard après l'enclenchement du chauffage. Mais le dispositif ne s'adapte pas à une cafetière expresso à commande manuelle où la demande de café peut se faire à un moment quelconque après la mise en chauffe. En outre, ceci provoque un allongement du temps de préparation de la cafetière avant utilisation.

Le document FR 2698775 prévoit deux thermostats avec des températures de consigne différentes. Mais le deuxième thermostat n'est utile que pour le maintien au chaud du récipient de récupération du café de la cafetière filtre.

Le document US 5549035 décrit une cafetière filtre où l'élément chauffant est contrôlé par un microprocesseur réagissant à plusieurs niveaux de température et diminuant la puissance de chauffage au départ. Ce dispositif fait varier la température de consigne suivant la phase d'obtention du café et de son maintien au chaud. Un microprocesseur fait varier la puissance moyenne appliquée à l'élément chauffant. Pendant une phase initiale de préchauffage, la puissance est appliquée avec des cycles de 7 secondes de chauffe et de 4 secondes d'arrêt de façon à laisser à l'eau le temps de s'échauffer à 98°C. Puis la puissance est appliquée en permanence tant que le bloc chauffant n'a pas atteint la température de 132°C. Quand la température atteint 154°C, indiquant une absence d'eau, le chauffage est arrêté. Cet agencement adapté au procédé spécifique d'obtention de café filtre avec une pompe thermique, ne peut en aucune manière être transposé à une cafetière à pompe électrique. Il présente l'inconvénient de ralentir le préchauffage en n'utilisant pas toute la puissance installée.

On connaît aussi le brevet FR 2774882 concernant les cafetières expresso. Dans ce document la cafetière est prévue avec une régulation prenant en compte l'état thermique momentané du thermobloc et la phase de fonctionnement pour fixer la température de consigne. Pour chaque phase de fonctionnement à savoir la phase de chauffe avant démarrage de la pompe, la phase d'extraction du café, la phase de maintien en température entre plusieurs extractions, la température de consigne varie en fonction des conditions initiales de température du corps de chauffe au début de cette phase. Un tel dispositif ne se justifie que sur des produits automatiques haut de gamme. En outre, ce procédé nécessite une électronique particulièrement sophistiquée et chère nécessitant une mise au point délicate.

L'invention ci-après a pour but une cafetière, à commande manuelle de l'extraction de café, qui ne présente pas les inconvénients cités c'est à dire qui permet de confectionner un café dans des conditions optimales de température d'eau aussitôt que la température de consigne du thermostat est atteinte et/ou ultérieurement, avec une régulation simple.

L'objet de l'invention est atteint par une cafetière électrique comportant un réservoir d'eau froide, une pompe électrique, une commande manuelle de l'extraction de café, et un thermobloc associé à des moyens électromécaniques et/ou électroniques de régulation à une valeur de température de consigne, et comportant un capteur de température en liaison thermique avec le thermobloc, les moyens de régulation sont aptes à réduire la valeur de consigne prise comme référence, suivant une fonction du temps après que le capteur ait lu une première fois une valeur de consigne initiale (t°i), du fait que les températures de consigne ultérieures sont rendues actives successivement dans un ordre des valeurs de températures décroissantes jusqu'à une consigne minimale qui reste active tant que la cafetière n'est pas mise hors tension.

Le capteur en contact avec le thermobloc peut être le bilame d'un thermostat, ou une résistance à coefficient de température positif ou négatif, mais ce peut être aussi un capteur, infrarouge par exemple, disposé à faible distance du thermobloc.

Les moyens de régulation de température, également appelés thermostat, sont tels que, lorsque le capteur lit la température de consigne, ils déclenchent c'est à dire coupent l'alimentation en électricité de l'élément chauffant du thermobloc, jusqu'à ce que celui ci refroidisse de telle sorte que le capteur lise à nouveau une température inférieure à celle de consigne et "réenclenche" pour rétablir l'alimentation en électricité.

Après le premier déclenchement du thermostat, la température devient peu à peu uniforme dans le thermobloc et l'échangeur, donc de plus en plus efficace ce qui, sans correction, conduirait à produire de l'eau de plus en plus chaude. Du fait que les moyens de régulation sont aptes à réduire la valeur de consigne suivant une relation prédéterminée en fonction du temps après la première coupure, on peut stabiliser l'échange thermique avec l'eau et obtenir de manière simple un café dans des conditions optimales quel que soit le moment où on extrait ce café.

Grâce à ce dispositif on peut se permettre, par exemple, d'afficher une température de consigne très haute, par exemple de 140°C, sachant que dès que le point local du thermobloc où se situe le capteur a atteint cette température, celle ci redescend rapidement. Le fait d'atteindre une si haute température permet d'emmagasiner un minimum d'énergie utilisable au niveau des circuits d'eau.

La relation prédéterminée de la valeur de consigne en fonction du temps peut être asymptotique décroissante de manière continue, suivant une courbe de type logarithmique ou exponentiel inverse. Cette relation prédéterminée peut être stockée dans une mémoire électronique des moyens de régulation électroniques sous la forme d'une table donnant pour chaque unité de temps écoulé, une nouvelle valeur de consigne.

De préférence, les moyens de régulation réduisent la valeur de consigne après une première durée prédéterminée après que le capteur ait une première fois lu la valeur de consigne initiale.

Le premier délai prédéterminé est par exemple de 30 secondes à une minute. On se fixe une température de consigne initiale raisonnable de l'ordre de 130°C sachant qu'on la maintiendra un temps minimal, et qu'on pourra la faire décroître plus lentement pour mieux accompagner une courbe théorique.

La température de consigne initiale est alors prévue, selon l'invention pour qu'au premier déclenchement du thermostat, l'énergie accumulée dans le thermobloc soit suffisante pour assurer une production d'eau chaude à la bonne température même si le thermobloc n'est pas stabilisé. On minimise ainsi le temps de préchauffage de la cafetière. Puis, la température de consigne est abaissée pour tenir compte de l'uniformisation ultérieure de la température.

De préférence les moyens de régulation réduisent dans le temps la valeur de consigne de température par paliers de durées prédéterminées, de la valeur de consigne initiale jusqu'à une valeur de consigne finale, cette dernière restant permanente jusqu'à l'arrêt de la cafetière.

On assure ainsi que quel que soit le moment où on fait le café, les conditions d'échange et la température de l'eau d'extraction seront identiques et optimales.

La valeur de consigne finale, donc minimale, correspond à la température stabilisée du thermobloc suffisante pour obtenir de l'eau à la température optimale, température que l'on observe au bout d'un temps très long après la mise en chauffe de la cafetière. En principe la décroissance idéale de la température de consigne avec le temps serait asymptotique en l'absence de chauffage d'eau. En pratique, il s'est avéré qu'une décroissance de valeur de consigne par paliers est particulièrement efficace.

Les paliers de température peuvent être ajustés de plusieurs façons pour suivre au mieux la courbe de décroissance de température théorique.

De préférence les paliers ont des durées égales et l'écart de température entre deux paliers est variable.

L'avantage de cette solution est de permettre un comptage de temps simple qui peut être obtenu par la constante de temps de tout dispositif variable.

La relation prédéterminée est ainsi caractérisée simplement par une table ne comportant que quelques entrées correspondant aux températures prédéterminées des différents paliers. La mémoire peut alors être de faible capacité ce qui en réduit le coût.

Dans une première version le temps est compté depuis le premier déclenchement de thermostat par une horloge interne à un circuit électronique.

Dans une deuxième version, le temps est compté depuis le premier déclenchement de thermostat en nombres de déclenchements du thermostat.

Dans la pratique le comptage du temps peut être réalisé ainsi simplement sans horloge interne en utilisant la constante de temps thermique du thermobloc donnant les cycles de thermostat en association avec le différentiel de ce dernier.

Cette dernière version permet l'utilisation d'un compteur électromécanique ou électronique qui avance d'un pas à chaque cycle. La durée d'un palier, en nombre prédéterminé de déclenchements, est de durée réelle légèrement variable avec la consigne mais surtout, elle peut être perturbée par l'utilisateur de la cafetière qui exécute un café. Le cycle s'allonge alors beaucoup ce qui est en fait un avantage car le réchauffement du thermobloc se fait plus vite dans le même palier. Le déclenchement du thermostat peut être détecté par le thermostat électronique s'il existe ou par l'absence de courant électrique dans l'élément chauffant du thermobloc.

Dans une autre version les paliers ont des durées variables et l'écart de température de consigne entre deux paliers est constant.

La relation prédéterminée est ainsi caractérisée simplement par une table ne comportant que quelques entrées correspondant à des délais prédéterminés t1, t2, t3, t4 des différents paliers. La mémoire peut alors être de faible capacité ce qui en réduit le coût.

On peut évidemment trouver des solutions mixtes intermédiaires à ces deux versions pour minimiser le nombre de paliers.

De préférence la régulation du thermobloc est électronique et comporte un microprocesseur disponible à bon marché.

De façon équivalente, la température de consigne pourrait être fixe et la température lue par le capteur faussée par un chauffage complémentaire de ce capteur, progressivement plus important avec le temps écoulé depuis la première fois que la température de consigne aurait été atteinte. L'échauffement du capteur au-delà de la température du point ou de la zone mesuré serait le même que la décroissance de température de consigne envisagée ci dessus (en valeur absolue).

L'invention sera mieux comprise au vu des exemples ci après et des dessins annexés dans lesquels
La figure 1 est une vue en coupe partielle longitudinale d'une cafetière selon l'invention.
La figure 2 est un diagramme illustrant le fonctionnement d'une cafetière selon l'invention.

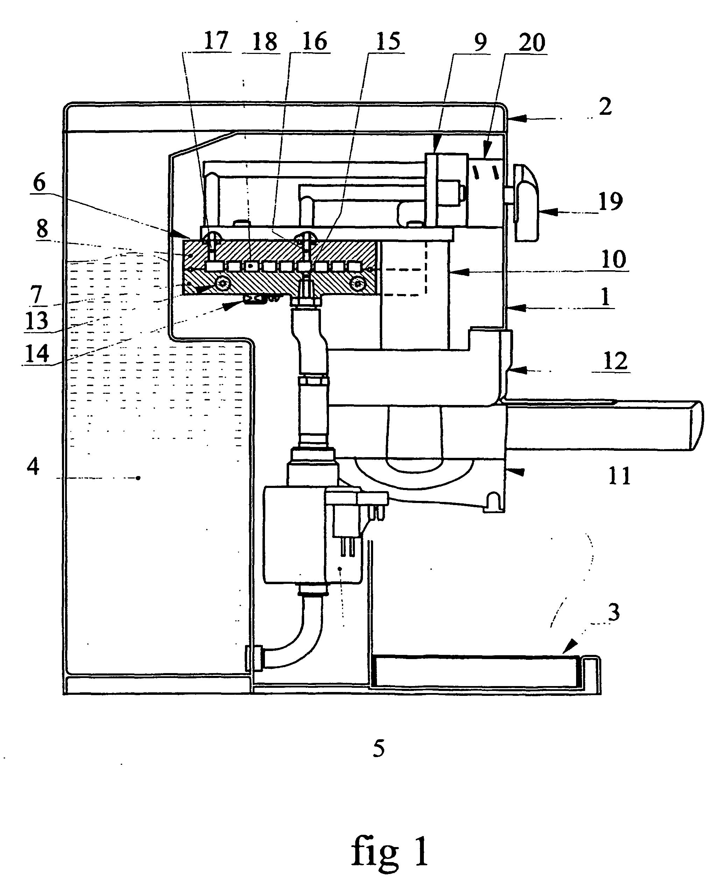

Dans une réalisation préférée de l'invention (figure 1), la cafetière comporte un corps ou boîtier 1 avec son couvercle 2 et son récolte goutte 3. Un réservoir d'eau froide 4 est en amont d'un circuit d'eau qui comprend en outre une pompe électrique 5, un thermobloc 6, un distributeur 9, un vérin 10 de compression de la mouture de café, un porte filtre 11 coulissant dans la rainure d'un support fixe 12, le filtre non représenté contenant la mouture de café. Le thermobloc 6 est constitué de deux pièces principales 7 et 8 accolées l'une sur l'autre et en relation thermique. La pièce 7 comporte un élément chauffant électrique 13 et un capteur de température 14. L'eau en provenance de la pompe 5 arrive par un canal d'entrée 15 de la pièce 7 et peut ressortir suivant deux chemins de la pièce 8 selon la position du distributeur 9. Soit l'eau sort froide par un canal de sortie 16 qui forme avec le canal d'entrée 15 un circuit très court ne permettant pas à l'eau de se réchauffer dans le thermobloc, soit l'eau sort chaude par un canal de sortie 17 après avoir circulé dans les canaux échangeurs de chaleur 18 ménagés entre les pièces 7 et 8 du thermobloc 6.

La cafetière comporte une commande manuelle 19 agissant à la fois sur un commutateur électrique 20 et sur le distributeur 9.

Le distributeur 9 dirige suivant la position de la commande 19 soit l'eau froide vers le vérin 10 de compression de la mouture, soit l'eau chaude vers la mouture, soit décomprime le circuit par un retour au réservoir non représenté.

La commande 19 comporte quatre positions qui sont successivement : une première position d'arrêt où la cafetière est hors tension, une deuxième position de préchauffage et d'attente où l'élément chauffant 13 est sous tension contrôlé par des moyens de régulation comprenant le capteur 14, une troisième position de compression de la mouture où, le préchauffage continuant, la pompe fonctionne et l'eau froide arrive au vérin 10 via le canal 16 pour comprimer la mouture, et une quatrième position d'extraction du café où la pompe fonctionne et l'eau chaude arrive via le canal 17 sur la mouture avant d'atteindre la tasse ou le récipient receveur. Ce récipient, en trait fin sur la figure, est posé sur le récolte gouttes 3.

Pour des raisons de fabrication et d'économie le thermobloc 6 est en deux pièces 7, 8 et l'élément chauffant est inclus dans la seule pièce 7 qui, bien que le contact soit bon avec la pièce 8, s'échauffe plus vite que cette dernière. De ce fait le capteur 14, généralement constitué par une résistance à coefficient de température négatif, est placé de préférence au contact de la pièce 7 qui contient l'élément chauffant 13.

Plus particulièrement selon l'invention, ce capteur fait partie des moyens de régulation, en l'occurrence d'un thermostat électronique mettant en oeuvre plusieurs températures de consigne par exemple 130°C, 120°C, 115°C, 110°C.

Le thermostat électronique comprend un microprocesseur, dont une entrée est reliée au capteur 14 et qui comprend des mémoires internes, et dont la sortie est reliée à un élément de commutation de puissance par exemple un relais ou un triac. Dans la mémoire du microprocesseur, sont alors stockées des tables représentant la relation prédéterminée entre le temps écoulé après le premier déclenchement et la valeur de consigne appliquée.

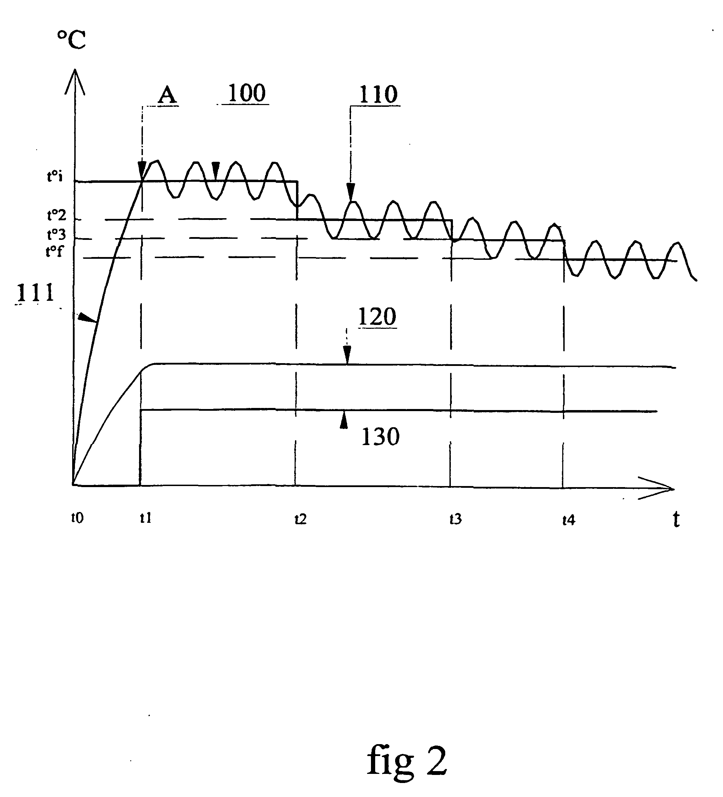

Le mode de régulation est tel que, à la mise en route t0, la température de consigne initiale t°i telle qu'illustrée sur la figure 2, soit la plus élevée (130°C) et que les températures de consigne ultérieures t°2, t°3, t°f soient rendues actives successivement dans un ordre des valeurs de températures décroissantes.

La température de consigne initiale t°i de 130°C est choisie de façon à ce que le thermobloc 6 ait emmagasiné suffisamment de chaleur utilisable au premier déclenchement du thermostat (au point A sur la figure 2), pour que l'eau d'extraction d'un café fait à ce moment soit suffisamment chaude, bien que la température du thermobloc en particulier de la pièce 8 ne soit pas uniforme.

La température de consigne minimale finale t°f de 110°C est choisie pour qu'un café exécuté après une longue période d'attente, le thermobloc ayant sa température stabilisée, ne soit pas trop chaud.

Un compteur est activé au premier déclenchement du thermostat. A ce moment t1 (figure 2) le capteur 14 mesure une température égale à t°i soit 130°C au différentiel du thermostat près. Selon une première version, le compteur totalise alors des impulsions provenant d'une horloge interne et le nombre d'impulsions est comparé à des valeurs prédéterminées t2-t1, t3-t1, t4-t1 correspondant respectivement à des temps de 2, 4, 5 minutes après t1. A chaque dépassement d'une de ces valeurs, le comparateur modifie la consigne du thermostat pour en abaisser la valeur jusqu'à une consigne minimale t°f qui reste ensuite active tant que la cafetière n'est pas mise hors tension. On obtient ainsi une courbe 100 de température de la consigne en fonction du temps présentant des paliers successifs de la température initiale t°i à la température minimale t°f.

Dans la pratique, des essais en laboratoire ont montré qu'il s'avère avantageux que les moyens de régulation utilisent une consigne initiale t°i de l'ordre de 130°C pendant une durée de t1 à t2 de l'ordre de 2 minutes, puis une consigne t°2 de l'ordre de 120°C pendant une durée de t2 à t3 de l'ordre de 2 minutes, puis une consigne t°3 de l'ordre de 115°C pendant une durée de t3 à t4 de l'ordre de 1 minute et finalement une consigne finale t°f de l'ordre de 110°C pour le reste du temps d'utilisation. On compense ainsi suffisamment bien l'évolution de l'échauffement du thermobloc après la mise sous tension de la cafetière jusqu'à sa stabilisation.

L'allure de la température lue par le capteur 14 en l'absence de l'exécution d'un café est représentée par la courbe 110 dont la première partie 111 de t0 à t1 traduit le premier échauffement du thermobloc de la température ambiante à la température de consigne initiale t°i. Pendant la seconde période de t1 à t2 la température lue par le capteur 14 suit la consigne active t°i en oscillant dans une bande correspondant au différentiel dynamique du système. L'énergie utile disponible emmagasinée dans le thermobloc, représentée par la courbe 120, est sensiblement constante à partir du temps t1. A partir de ce temps t1 on peut à tout moment faire un café dont la température mesurée dans la tasse représentée par la courbe 130 est optimale quel que soit le moment où la cafetière est utilisée.

Par ailleurs, on constate que les oscillations de température lue par le capteur 14 sont de période sensiblement constante. Aussi, selon une seconde version de l'invention, le compteur totalise un nombre de déclenchements du thermostat correspondant à un nombre de périodes prédéterminées et définissant une durée t-t1 de manière certes approximative mais suffisamment efficace. Cette solution a comme premier avantage d'économiser une horloge électronique interne.

En outre, lorsqu'on fait un café, l'échauffement de l'eau conduit à un allongement de la période en cours et du palier en cours, de sorte que l'échauffement du thermobloc reprend ensuite dans le même palier en compensant plus rapidement les pertes subies que si, pendant ce temps on avait changé de palier.

La commande du triac ou du relais de puissance de chauffage, le thermostat, l'horloge, le compteur et le comparateur peuvent être réalisés de manière économique sur un circuit imprimé comportant un microprocesseur assurant toutes ces fonctions de contrôle et de modification de consigne en minimisant le nombre de composants.

L'utilisateur met la cafetière sous tension en agissant sur la commande 19. L'élément chauffant 13 est alors alimenté et la pièce 7 du thermobloc 6 s'échauffe rapidement tandis que d'autres endroits du thermobloc s'échauffent moins vite, dont la pièce 8. Le capteur 14 placé sur la pièce 7 lit un échauffement suivant la courbe 111. Quand le thermostat déclenche, au point A, le thermobloc n'a certes pas une température uniforme mais comporte des parties à la température de consigne initiale élevée, ce qui permet à un café exécuté à ce moment d'être suffisamment chaud. Si l'utilisateur attend quelque peu, la régulation change la température de consigne au fur et à mesure de l'uniformisation de la température du thermobloc, de façon à ce qu'un échange de chaleur avec l'eau puisse se faire avec le même transfert d'énergie. A tout moment l'utilisateur peut actionner la commande 19 de façon à comprimer la mouture contenue dans le porte filtre 11 puis commander l'exécution d'un café avec la même commande 19. Dans tous les cas, l'échange de chaleur étant identique, la température de l'eau d'extraction et du café sera constante et optimale.

Dans une autre version la cafetière ne comporte pas de vérin de compression de la mouture, mais la régulation de température est identique ainsi que son fonctionnement.

## Revendications

1. Cafetière électrique comportant un réservoir (4) d'eau froide, une pompe électrique (5), une commande manuelle (19) de l'extraction de café, et un thermobloc (6) associé à des moyens électromécaniques et/ou électroniques de régulation à une valeur de température de consigne, et comportant un capteur de température (14) en liaison thermique avec le thermobloc (6), les moyens de régulation étant aptes à réduire la valeur de consigne prise comme référence, suivant une fonction du temps après que le capteur ait lu une première fois une valeur de consigne initiale (t°i), **caractérisée en ce que** les températures de consigne ultérieures sont rendues actives successivement dans un ordre des valeurs de températures décroissantes jusqu'à une consigne minimale qui reste active tant que la cafetière n'est pas mise hors tension.

2. Cafetière selon la revendication 1 **caractérisée en ce que** les moyens de régulation réduisent la valeur de consigne après une durée prédéterminée après que le capteur ait une première fois lu la valeur de consigne initiale (t°i).

3. Cafetière selon la revendication 2 **caractérisée en ce que** les moyens de régulation réduisent dans le temps la valeur de consigne de température par paliers de durées prédéterminées, de la valeur de consigne initiale (t°i) jusqu'à une valeur de consigne finale (t°f), cette dernière restant permanente jusqu'à l'arrêt de la cafetière.

4. Cafetière selon la revendication 3 **caractérisée en ce que** les paliers ont des durées égales et l'écart de température entre deux paliers est variable.

5. Cafetière selon la revendication 3 **caractérisée en ce que** les paliers ont des durées variables et l'écart de température de consigne entre deux paliers est constant.

6. Cafetière selon l'une des revendications 1 à 5 **caractérisée en ce que** le temps est compté par une horloge interne à un circuit électronique après que le capteur ait lu une première fois une valeur de consigne initiale (t°i).

7. Cafetière selon l'une des revendications 1 à 5 **caractérisée en ce que** le temps est compté en nombres de déclenchements du thermostat après que le capteur ait lu une première fois une valeur de consigne initiale (t°i).

8. Cafetière selon l'une des revendications précédentes **caractérisée en ce que** la régulation du thermobloc est électronique et comporte un microprocesseur.

## Patentansprüche

1. Elektrische Kaffeemaschine mit einem Behälter (4) für kaltes Wasser, einer elektrischen Pumpe (5), einer manuellen Steuerung (19) zur Kaffeeentnahme und einem Thermoblock (6), der elektromechanischen und/oder elektronischen Mitteln zur Regulierung bei einem Solltemperaturwert zugeordnet ist, und mit einem Temperatursensor (14), der thermisch mit dem Thermoblock (6) verbunden ist, wobei die Regulierungsmittel dazu geeignet sind, den Sollwert, der als Bezugswert genommen wird, gemäß einer Zeitfunktion zu reduzieren, nachdem der Sensor einen ursprünglichen Sollwert (t°i) ein erstes Mal gelesen hat, **dadurch gekennzeichnet, dass** die späteren Solltemperaturen nacheinander in der Reihenfolge der abnehmenden Temperaturwerte bis zu einem Minimalsollwert, der aktiv bleibt, solange die Kaffeemaschine nicht ausgeschaltet ist, aktiviert werden.

2. Kaffeemaschine nach Anspruch 1, **dadurch gekennzeichnet, dass** die Regulierungsmittel den Sollwert nach einer vorbestimmten Dauer reduzieren, nachdem der Sensor den ursprünglichen Sollwert (t°i) ein erstes Mal gelesen hat.

3. Kaffeemaschine nach Anspruch 2, **dadurch gekennzeichnet, dass** die Regulierungsmittel den Temperatursollwert von dem ursprünglichen Sollwert (t°i) bis zu einem Endsollwert (t°f) mit der Zeit in Stufen mit vorbestimmter Dauer reduzieren, wobei der Endsollwert bis zum Ausschalten der Kaffeemaschine permanent bleibt.

4. Kaffeemaschine nach Anspruch 3, **dadurch gekennzeichnet, dass** die Stufen gleiche Dauer haben und der Temperaturschritt zwischen zwei Stufen variabel ist.

5. Kaffeemaschine nach Anspruch 3, **dadurch gekennzeichnet, dass** die Stufen variable Dauer haben und der Solltemperaturschritt zwischen zwei Stufen konstant ist.

6. Kaffeemaschine nach einem der Ansprüche 1 bis 5, **dadurch gekennzeichnet, dass** die Zeit von einer Uhr gemessen wird, die sich in einer elektronischen Schaltung befindet, nachdem der Sensor einen ursprünglichen Sollwert (t°i) ein erstes Mal gelesen hat.

7. Kaffeemaschine nach einem der Ansprüche 1 bis 5, **dadurch gekennzeichnet, dass** die Zeit nach der Anzahl der Auslösungen des Thermostats gemessen wird, nachdem der Sensor einen ursprünglichen Sollwert (t°i) ein erstes Mal gelesen hat.

8. Kaffeemaschine nach einem der vorhergehenden Ansprüche, **dadurch gekennzeichnet, dass** die Regulierung des Thermoblocks elektronisch ist und einen Mikroprozessor aufweist.

## Claims

1. An electric coffee maker comprising a cold water tank (4), an electric pump (5), a manual coffee-extraction control (19), and a thermal block (6) associated with electromechanical and/or electronic regulator means for regulating temperature to a setpoint value, and including a temperature sensor (14) in thermal connection with the thermal block (6), the regulator means being suitable for modifying the setpoint value taken as a reference, by reducing it as a function of time after the sensor has read an initial setpoint value (t°i) for a first time, the coffee maker being **characterized in that** the subsequent setpoint temperatures are made active in succession in an order of decreasing temperature values down to a minimum setpoint which remains active so long as the coffee maker is not switched off.

2. A coffee maker according to claim 1, **characterized in that** the regulator means reduce the value of the setpoint after a predetermined duration has elapsed from the sensor reading the initial setpoint value (t°i) for the first time.

3. A coffee maker according to claim 2, **characterized in that** the regulator means reduce the value of the temperature setpoint over time in stages of predetermined durations, from the initial setpoint value (t°i) to a final setpoint value (t°f), the final setpoint value remaining permanent until the coffee maker is switched off.

4. A coffee maker according to claim 3, **characterized in that** the stages are of equal duration and the temperature difference between two successive stages is variable.

5. A coffee maker according to claim 3, **characterized in that** the stages are of varying durations and the difference in setpoint temperature between two successive stages if constant.

6. A coffee maker according to any one of claims 1 to 5, **characterized in that** time is measured by a clock internal to an electronic circuit after the sensor has read an initial setpoint value (t°i) for the first time.

7. A coffee maker according to any one of claims 1 to 5, **characterized in that** time is measured as a number of thermostat trigger operations after the sensor has read an initial setpoint value (t°i) for the first time.

8. A coffee maker according to any preceding claim, **characterized in that** the thermal block is regulated electronically and includes a microprocessor.
